# EUROPEAN PATENT SPECIFICATION

(11) **EP 4 310 974 B1**
(45) Date of publication and mention of the grant of the patent: **26.11.2025**
(21) Application number: 22884126.8
(22) Date of filing: 24.10.2022
(51) Int. Cl.: H01M 10/0567, H01M 10/052, H01M 50/107, H01M 10/0525, H01M 10/0568, H01M 10/0569

(54) **ELECTROLYTE ADDITIVE, ELECTROLYTE FOR LITHIUM SECONDARY BATTERY COMPRISING SAME, AND LITHIUM SECONDARY BATTERY**
ELEKTROLYTADDITIV, ELEKTROLYT FÜR LITHIUMSEKUNDÄRBATTERIE DAMIT UND LITHIUMSEKUNDÄRBATTERIE
ADDITIF D'ÉLECTROLYTE, ÉLECTROLYTE POUR BATTERIE SECONDAIRE AU LITHIUM LE COMPRENANT, ET BATTERIE SECONDAIRE AU LITHIUM

(30) Priority: 22.10.2021 KR 20210142005
(43) Date of publication of application: 24.01.2024
(73) Proprietor: LG ENERGY SOLUTION, LTD., Seoul 07335 (KR)
(72) Inventor: HAN, Seungmi, Daejeon 34122 (KR); TAKEUCHI, Takashi, Daejeon 34122 (KR)
(74) Representative: Goddar, Heinz J.
(86) International application number: PCT/KR2022/016249
(87) International publication number: WO 2023/068905

(56) References cited:
- EP-A1- 2 704 246
- EP-A1- 2 768 064
- EP-A2- 3 605 710
- JP-B1- 5 835 514
- KR-A- 20190 033 448
- KR-A- 20200 092 889
- US-A1- 2013 330 582
- US-A1- 2018 287 203
- US-A1- 2021 036 366
- US-A1- 2021 313 611

## Description

### [Technical Field]

The present invention relates to an electrolyte solution additive, and an electrolyte solution for a lithium secondary battery and a lithium secondary battery, including the same.

### [Background Art]

Recently, with the rapid spread of electronic devices using batteries such as mobile phones, notebooksized computers, and electric vehicles, the demand for small and lightweight secondary batteries having relatively high capacity is rapidly increasing. In particular, lithium secondary batteries are lightweight and have high energy density, and thus have attracted attention as driving power sources for mobile devices. Accordingly, research and development efforts to improve the performance of lithium secondary batteries have been actively conducted.

In general, a lithium secondary battery consist of a carbon material or silicon-based negative electrode capable of absorbing and releasing lithium ions, a positive electrode including a lithium-containing transition metal oxide, and a non-aqueous electrolyte solution, and can be charged and discharged because lithium ions released from a positive electrode active material by the first charge serve to transfer energy while reciprocating between both electrodes such as intercalation into the negative electrode active material and deintercalation again during discharge.

However, as the battery is charged and discharged, the performance of the positive electrode deteriorates while the positive electrode active material structurally collapses. Further, when the structure of the positive electrode collapses, metal ions eluted from the surface of the positive electrode degrade the negative electrode while being electrodeposited on the negative electrode. Such a battery performance degradation phenomenon tends to be accelerated when the potential of the positive electrode increases or when the battery is exposed to high temperature.

In order to solve these problems, there has been proposed a method of adding a compound capable of forming a protective film capable of suppressing metal elution or dendrites on the electrode surface to a non-aqueous electrolyte solution. However, various performances of the secondary battery may deteriorate in some cases while compounds added to the electrolyte solution cause other side effects.

In addition, after the activation process of the battery is completed, a low voltage determination criterion in the open circuit voltage (OCV) distribution is in a range of ±2 mV of the normal voltage, and when the distribution of the open circuit voltage shows a bimodal curve or a wide distribution, the battery is determined to be defective, thereby causing a problem in that the yield becomes very low.

Therefore, there is a continuing need for the development of an electrolyte solution containing additives capable of increasing the yield of a battery without degrading the performance and stability of the battery while minimizing side effects.
EP 3 605 710 A2 relates to a non-aqueous electrolyte solution for a lithium secondary battery and a lithium secondary battery, and particularly, to a non-aqueous electrolyte solution for a lithium secondary battery, which includes an additive having metal ion adsorbability and capable of forming a stable ion conductive film on the surface of an electrode, and a lithium secondary battery in which an abnormal voltage drop phenomenon is improved by including the same.

### [Detailed Description of the Invention]

### [Technical Problem]

The present invention relates to an electrolyte solution additive, and an electrolyte solution for a lithium secondary battery and a lithium secondary battery, including the same.

### [Technical Solution]

The present invention provides an electrolyte solution additive including: a sultone-based compound; LiPO₂F₂; and a compound represented by the following Chemical Formula 1. 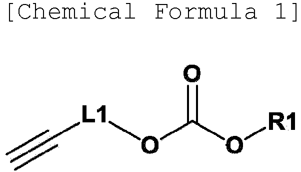 In Chemical Formula 1,
R1 is hydrogen; a substituted or unsubstituted alkyl group having 1 to 10 carbon atoms; or a substituted or unsubstituted aryl group having 6 to 30 carbon atoms, and
L1 is a substituted or unsubstituted alkylene group having 1 to 10 carbon atoms.

An exemplary embodiment of the present invention provides an electrolyte solution for a lithium secondary battery, including: a lithium salt; an organic solvent; and the electrolyte solution additive.

An exemplary embodiment of the present invention provides a lithium secondary battery including the electrolyte solution for a lithium secondary battery.

### [Advantageous Effects]

The electrolyte solution additive according to an exemplary embodiment of the present invention has an effect of increasing the yield of a battery by improving the open circuit voltage (OCV) distribution after the completion of the activation process without degrading the performance and stability of the battery.

### [Description of Drawings]

FIGs. 1 to 9 illustrate the OCV distributions of Examples 1 to 9 of the present invention, respectively.
FIGs. 10 to 15 illustrate the OCV distributions of Comparative Examples 1 to 6 of the present invention, respectively.

### [Best Mode]

Hereinafter, the present specification will be described in more detail.

When one part "includes" one constituent element in the present specification, unless otherwise specifically described, this does not mean that another constituent element is excluded, but means that another constituent element may be further included.

When one member is disposed "on" another member in the present specification, this includes not only a case where the one member is brought into contact with another member, but also a case where still another member is present between the two members.

Singular expressions of the terms used in the present specification include plural expressions unless they have definitely opposite meanings in the context.

Examples of the substituents in the present specification will be described below, but are not limited thereto.

The term "substitution" means that a hydrogen atom bonded to a carbon atom of a compound is changed into another substituent, and a position to be substituted is not limited as long as the position is a position at which the hydrogen atom is substituted, that is, a position at which the substituent may be substituted, and when two or more are substituted, the two or more substituents may be the same as or different from each other.

In the present specification, the term "substituted or unsubstituted" means being substituted with one or two or more substituents selected from the group consisting of deuterium; a halogen group; a nitrile group (-CN); a nitro group; a hydroxyl group; an alkyl group; an aryl group; or a heterocyclic group, being substituted with a substituent to which two or more substituents among the exemplified substituents are linked, or having no substituent. For example, "the substituent to which two or more substituents are linked" may be a biphenyl group. That is, the biphenyl group may also be an aryl group, and may be interpreted as a substituent to which two phenyl groups are linked.

In the present specification, the alkyl group may be straight-chained or branched, and the number of carbon atoms thereof is not particularly limited, but is preferably 1 to 60. According to an exemplary embodiment, the number of carbon atoms of the alkyl group is 1 to 30. According to another exemplary embodiment, the number of carbon atoms of the alkyl group is 1 to 20. According to still another exemplary embodiment, the number of carbon atoms of the alkyl group is 1 to 10. Specific examples of the alkyl group include a methyl group, an ethyl group, a propyl group, an n-propyl group, an isopropyl group, a butyl group, an n-butyl group, an isobutyl group, a tert-butyl group, a pentyl group, an n-pentyl group, a hexyl group, an n-hexyl group, a heptyl group, an n-heptyl group, an octyl group, an n-octyl group, and the like, but are not limited thereto.

In the present specification, an alkenyl group may be straight-chained or branched, and the number of carbon atoms thereof is not particularly limited, but is preferably 2 to 40. According to an exemplary embodiment, the number of carbon atoms of the alkenyl group is 2 to 20. According to another exemplary embodiment, the number of carbon atoms of the alkenyl group is 2 to 10. According to still another exemplary embodiment, the number of carbon atoms of the alkenyl group is 2 to 6. Specific examples thereof include vinyl, 1-propenyl, isopropenyl, 1-butenyl, 2-butenyl, 3-butenyl, 1-pentenyl, 2-pentenyl, 3-pentenyl, 3-methyl-1-butenyl, 1,3-butadienyl, allyl, 1-phenylvinyl-1-yl, 2-phenylvinyl-1-yl, 2,2-diphenylvinyl-1-yl, 2-phenyl-2-(naphthyl-1-yl)vinyl-1-yl, 2,2-bis(diphenyl-1-yl)vinyl-1-yl, a styrenyl group, and the like, but are not limited thereto.

In the present specification, the alkynyl group may be straight-chained or branched as a substituent including a triple bond between a carbon atom and a carbon atom, and the number of carbon atoms thereof is not particularly limited, but is preferably 2 to 40. According to an exemplary embodiment, the number of carbon atoms of the alkynyl group is 2 to 20. According to another exemplary embodiment, the number of carbon atoms of the alkynyl group is 2 to 10.

In the present specification, an aryl group is not particularly limited, but has preferably 6 to 60 carbon atoms, and may be a monocyclic aryl group or a polycyclic aryl group. According to an exemplary embodiment, the number of carbon atoms of the aryl group is 6 to 30. According to an exemplary embodiment, the number of carbon atoms of the aryl group is 6 to 20. Examples of the monocyclic aryl group include a phenyl group, a biphenyl group, a terphenyl group, a quarterphenyl group, and the like, but are not limited thereto. Examples of the polycyclic aryl group include a naphthyl group, an anthracenyl group, a phenanthrenyl group, a pyrenyl group, a perylenyl group, a triphenylenyl group, a chrysenyl group, a fluorenyl group, and the like, but are not limited thereto.

In the present specification, a heterocyclic group is a cyclic group including one or more of N, O, P, S, Si, and Se as a heteroatom, and the number of carbon atoms thereof is not particularly limited, but is preferably 2 to 60. According to an exemplary embodiment, the number of carbon atoms of the heterocyclic group is 2 to 30. According to an exemplary embodiment, the number of carbon atoms of the heterocyclic group is 2 to 20. Examples of the heterocyclic group include a pyridine group, a pyrrole group, a pyrimidine group, a quinoline group, a pyridazinyl group, a furan group, a thiophene group, an imidazole group, a pyrazole group, a dibenzofuran group, a dibenzothiophene group, a carbazole group, a benzocarbazole group, a naphthobenzofuran group, a benzonaphthothiophene group, an indenocarbazole group, a triazinyl group, and the like, but are not limited thereto.

In the present specification, the description on the alkyl group may be applied to an akylene group except for a divalent alkylene group.

In the present specification, the description on the alkenyl group may be applied to an alkenylene group except for a divalent alkenylene group.

Hereinafter, preferred exemplary embodiments of the present invention will be described in detail. However, the exemplary embodiments of the present invention may be modified into various other forms, and the scope of the present invention is not limited to the exemplary embodiments which will be described below.

The present invention provides an electrolyte solution additive including: a sultone-based compound; LiPO₂F₂; and a compound represented by the following Chemical Formula 1.

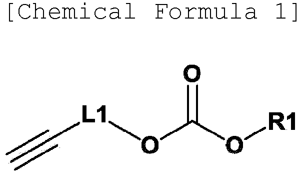

In Chemical Formula 1,
R1 is hydrogen; a substituted or unsubstituted alkyl group having 1 to 10 carbon atoms; or a substituted or unsubstituted aryl group having 6 to 30 carbon atoms, and
L1 is a substituted or unsubstituted alkylene group having 1 to 10 carbon atoms.

In general, after the activation process of the battery is completed, a low voltage determination criterion in the open circuit voltage (OCV) distribution is in a range of ±2 mV of the normal voltage, and when the distribution of the open circuit voltage shows a bimodal curve or a wide distribution, the battery is determined to be defective, thereby causing a problem in that the yield becomes very low.

A battery using the electrolyte solution additive according to an exemplary embodiment of the present invention may contribute to an improvement in yield because the distribution of the open circuit voltage exhibits a very sharp shape after completion of the activation process.

In general, when the film resistance of the negative electrode is too large, a deviation occurs in the state of charge of the battery, so that the OCV distribution is broadened after the final activation process because the OCV distribution is broadened after the first charge. Conversely, when the film resistance of the negative electrode is too small, self-discharge deviation occurs during high-temperature aging, so that the OCV distribution is broadened after the final activation process because the OCV distribution after high-temperature aging becomes large.

Since the sultone-based compound increases the film resistance of the negative electrode, there is a problem in that the resistance of the battery is greatly increased when only the sultone-based compound is used for an electrolyte solution. Conversely, since the compound of Chemical Formula 1 is reduced in the electrolyte solution before the sultone-based compound, it is possible to suppress the resistance effect by the sultone-based compound, but a film to be formed has a low ability to suppress reduction in the electrolyte solution because the compound of Chemical Formula 1 is reduced in the electrolyte solution before the sultone-based compound, and thus, there is a problem in that the self-discharge of the battery increases.
Therefore, when only the sultone-based compound and the compound of Chemical Formula 1 are used, the film resistance is so low that the there is a problem in that the yield is reduced because the OCV distribution becomes large after the battery activation process due to the deviation of self-discharge.

Although LiPO₂F₂ forms a film well, LiPO₂F₂ has insufficient self-discharge suppression characteristics and cannot suppress the effect of sultone-based compounds. Therefore, when only the sultone-based compound and LiPO₂F₂ are used, the OCV distribution also becomes large during battery charging because the film resistance becomes too large, so that there is a problem in that the yield is reduced because there is a broad OCV distribution even after the activation process.

Conversely, when the electrolyte solution additive of the present invention, which simultaneously includes a sultone-based compound, LiPO₂F₂ and the compound of Chemical Formula 1, is used, an optimum film resistance may be obtained and the OCV distribution after the activation process of the battery is sharply improved, so that there is an effect in which the yield of the battery is also enhanced.

In an exemplary embodiment of the present invention, the electrolyte solution additive includes a compound represented by the following Chemical Formula 1.

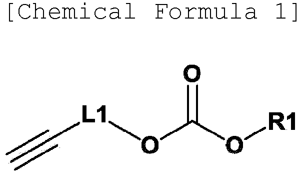

In Chemical Formula 1,
R1 is hydrogen; a substituted or unsubstituted alkyl group having 1 to 10 carbon atoms; or a substituted or unsubstituted aryl group having 6 to 30 carbon atoms, and
L1 is a substituted or unsubstituted alkylene group having 1 to 10 carbon atoms.

In an exemplary embodiment of the present invention, R1 is hydrogen; an alkyl group having 1 to 10 carbon atoms; or an aryl group having 6 to 30 carbon atoms.

In an exemplary embodiment of the present invention, R1 is an alkyl group having 1 to 10 carbon atoms.

In an exemplary embodiment of the present invention, R1 is an alkyl group having 1 to 5 carbon atoms.

In an exemplary embodiment of the present invention, R1 is a methyl group; an ethyl group; a propyl group; a butyl group; or a pentyl group.

In an exemplary embodiment of the present invention, R1 is a methyl group.

In an exemplary embodiment of the present invention, L1 is an alkylene group having 1 to 10 carbon atoms.

In an exemplary embodiment of the present invention, L1 is an alkylene group having 1 to 5 carbon atoms.

In an exemplary embodiment of the present invention, L1 is a methylene group; an ethylene group; a propylene group; a butylene group; or a pentylene group.

In an exemplary embodiment of the present invention, L1 is a methylene group.

In an exemplary embodiment of the present invention, the compound represented by Chemical Formula 1 is methyl prop-2-yn-1-yl carbonate.

In an exemplary embodiment of the present invention, the compound represented by Chemical Formula 1 is represented by the following compound.

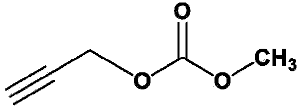

The electrolyte solution additive according to an exemplary embodiment of the present invention includes a sultone-based compound.

In an exemplary embodiment of the present invention, the sultone-based compound may include a structure including cyclic sulfonic ester. Specifically, the sultone-based compound may include a compound represented by the following Chemical Formula 2.

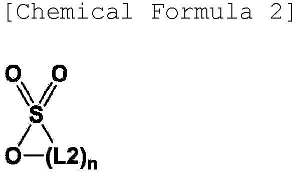

In Chemical Formula 2,
L2 is a substituted or unsubstituted alkylene group having 1 to 10 carbon atoms; or a substituted or unsubstituted alkenylene group having 2 to 10 carbon atoms, and
n is 1 to 10.

In an exemplary embodiment of the present invention, L2 is an alkylene group having 1 to 10 carbon atoms, which is unsubstituted or substituted with an alkyl group having 1 to 10 carbon atoms; or an alkenylene group having 2 to 10 carbon atoms, which is unsubstituted or substituted with an alkyl group having 1 to 10 carbon atoms.

In an exemplary embodiment of the present invention, L2 is an ethylene group which is unsubstituted or substituted with a methyl group; a propylene group which is unsubstituted or substituted with a methyl group; a butylene group which is unsubstituted or substituted with a methyl group; a vinylene group which is unsubstituted or substituted with a methyl group; or a propenylene group which is unsubstituted or substituted with a methyl group.

In an exemplary embodiment of the present invention, L2 is a methylene group; a propylene group; a vinylene group; or a propenylene group.

In an exemplary embodiment of the present invention, n is 1 to 3.

The sultone-based compound may be 1,3-propane sultone, 1,4-butane sultone, ethenesultone, and 1-propene 1,3-sultone, and may be preferably 1,3-propane sultone, 1-propene 1,3-sultone or a mixture of 1,3-propane sultone and 1-propene 1,3-sultone.

In an exemplary embodiment of the present invention, the sultone-based compound may be one or more selected from the group consisting of 1,3-propane sultone and 1-propene 1,3-sultone.

The 1,3-propane sultone is

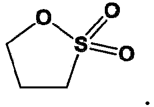

The 1-propene 1,3-sultone is

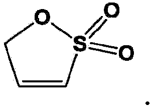

Specifically, when the compound is used, it tends to increase the film resistance of the negative electrode.

The electrolyte solution additive according to an exemplary embodiment of the present invention includes LiPO₂F₂.

In an exemplary embodiment of the present invention, the sultone-based compound may be included in an amount of 10 parts by weight to 50 parts by weight based on 100 parts by weight of the entire electrolyte solution additive. In another exemplary embodiment, the sultone-based compound may be included in an amount of 14 parts by weight to 46 parts by weight, or may be included in an amount of 25 parts by weight to 30 parts by weight. When the content of the sultone-based compound is less than the above range, a sufficient film effect cannot be obtained and side effects occur during high-temperature aging, so that there is a problem in that the OCV distribution is increased. Conversely, when the content of the sultone-based compound exceeds the above range, the interfacial resistance increases and a deviation in the state of charge occurs during charging, so that there is a problem in that the OCV distribution becomes large.

In an exemplary embodiment of the present invention, the LiPO₂F₂ may be included in an amount of 30 parts by weight to 80 parts by weight based on 100 parts by weight of the entire electrolyte solution additive. In another exemplary embodiment, the LiPO₂F₂ may be included in an amount of 40 parts by weight to 75 parts by weight, or may be included in an amount of 55 parts by weight to 65 parts by weight. When the LiPO₂F₂ content is less than the above range, the interfacial resistance cannot be sufficiently reduced and a deviation in the state of charge occurs during charging, so that there is a problem in that the OCV distribution becomes large. Conversely, when the LiPO₂F₂ content exceeds the above range, the interfacial resistance becomes too small and side effects occur during high-temperature aging, so that there is a problem in that the OCV distribution is increased.

In an exemplary embodiment of the present invention, the compound represented by Chemical Formula 1 may be included in an amount of 1 part by weight to 30 parts by weight based on 100 parts by weight of the entire electrolyte solution additive. In another exemplary embodiment, the compound represented by Chemical Formula 1 may be included in an amount of 3 parts by weight to 27 parts by weight, or may be included in an amount of 10 parts by weight to 12 parts by weight. When the content of the compound represented by Chemical Formula 1 is less than the above range, the sultone-based compound forms a film preferentially over the compound represented by Chemical Formula 1, so that there is a problem in that the OCV distribution becomes large because the interfacial resistance is increased and a deviation in the state of charge occurs during charging. Conversely, when the content of the compound represented by Chemical Formula 1 exceeds the above range, the film-forming reaction of the sultone-based compound is excessively suppressed, so that there is a problem in that the OCV distribution becomes large because a sufficient interfacial resistance cannot be obtained and side effects occur during high-temperature aging.

In an exemplary embodiment of the present invention, the weight ratio of the sultone-based compound and the compound represented by Chemical Formula 1 (sultone-based compound : compound represented by Chemical Formula 1) may be 1:9 to 9:1. Specifically, the weight ratio may be 2:8 to 9:1, or may be 5:5 to 8:2. More specifically, the weight ratio may be 7:3 to 8:2.

When the above range is satisfied, there is an effect in which the yield of the battery is also enhanced because the optimum film resistance can be obtained and the OCV distribution is sharply improved after the battery activation process. Conversely, there is a problem in that when the proportion of the sultone-based compound is too high, the interfacial resistance is excessively increased, and when the proportion of the sultone-based compound is too low, the self-discharge becomes too large during high-temperature aging.

In an exemplary embodiment of the present invention, the weight ratio of the sultone-based compound and the LiPO₂F₂ (sultone-based compound : LiPO₂F₂) may be 1:9 to 9:1. Specifically, the weight ratio may be 2:8 to 8:2, or may be 2:8 to 5:5. More specifically, the weight ratio may be 3:7 to 4:6.

When the above range is satisfied, there is an effect in which the yield of the battery is also enhanced because the optimum film resistance can be obtained and the OCV distribution is sharply improved after the battery activation process.

An exemplary embodiment of the present invention provides an electrolyte solution for a lithium secondary battery, including: a lithium salt; an organic solvent; and the above-described electrolyte solution additive.

As the lithium salt included in the electrolyte solution, those typically used in an electrolyte solution for a lithium secondary battery can be used without limitation, and for example, the lithium salt includes Li⁺ as a cation, and may include, as an anion, at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, CF₃(CF₂)₇SO₃⁻, CF₃CO₂⁻, CH₃CO₂ and (CF₃CF₂SO₂)₂N⁻. The lithium salts may be used alone or in a mixture of two or more, if necessary.

In an exemplary embodiment of the present invention, the lithium salt may be one or more selected from the group consisting of LiPF₆ and LiN(CF₃SO₂)₂ (LiFSI) .

Although the lithium salt may be appropriately changed within a range that can be typically used, the lithium salt may be included at a concentration of total 0.8 M to 2.0 M in the electrolyte solution in order to obtain an optimum effect of forming a corrosion-preventing film on the electrode surface.

The organic solvent included in the electrolyte solution may include any one selected from the group consisting of an ether-based solvent, an ester-based solvent and an amide-based solvent, or a mixture of two or more selected from the above group. The organic solvent is not limited thereto, and those typically used in electrolyte solutions for a lithium secondary battery can be used without limitation.

As an ether-based solvent among the organic solvents, it is possible to use any one or a mixture of two or more selected from the group consisting of dimethyl ether, diethyl ether, dipropyl ether, methyl ethyl ether, methyl propyl ether, and ethyl propyl ether, but the ether-based solvent is not limited thereto.

Further, the ester-based solvent may include at least one or more compounds selected from the group consisting of a cyclic carbonate compound, a linear carbonate compound, a linear ester compound and a cyclic ester compound.

Among them, specific examples of the cyclic carbonate compound include any one or a mixture of two or more selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate and fluoroethylene carbonate (FEC).

In addition, as a specific example of the linear carbonate compound, it is possible to representatively use any one or a mixture of two or more selected from the group consisting of dimethyl carbonate (DMC), diethyl carbonate (DEC), dipropyl carbonate, ethyl methyl carbonate (EMC), methyl propyl carbonate and ethyl propyl carbonate, and the like, but the example is not limited thereto.

As a specific example of the linear ester compound, it is possible to representatively use any one or a mixture of two or more selected from the group consisting of methyl acetate, ethyl acetate, propyl acetate, methyl propionate, ethyl propionate, propyl propionate, and butyl propionate, and the like, but the example is not limited thereto.

As a specific example of the cyclic ester compound, it is possible to use any one or a mixture of two or more selected from the group consisting of γ-butyrolactone, γ-valerolactone, γ-caprolactone, σ-valerolactone, and ε-caprolactone, but the example is not limited thereto.

In this case, among the ester-based solvents, the cyclic carbonate-based compound may be preferably used because the cyclic carbonate-based compound has high permittivity as an organic solvent with a high viscosity and thus dissociates a lithium salt in the electrolyte solution well, and such a cyclic carbonate-based compound may be more preferably used since the cyclic carbonate-based compound may be mixed with a linear carbonate-based compound with a low viscosity and low permittivity such as dimethyl carbonate and diethyl carbonate in an appropriate ratio and used to prepare an electrolyte solution having a high electric conductivity.

In an exemplary embodiment of the present invention, the organic solvent may include a carbonate compound.

In an exemplary embodiment of the present invention, the organic solvent may be a mixture of ethylene carbonate (EC), ethyl methyl carbonate (EMC) and dimethyl carbonate (DMC) .

In an exemplary embodiment of the present invention, the electrolyte solution for a lithium secondary battery may further include an additional additive, if necessary. Specifically, the additional additive is not particularly limited as long as it is an additive for forming an SEI film capable of forming a stable film on the surfaces of the positive electrode and the negative electrode.

Specifically, it is possible to further include one or more additives selected from the group consisting of a halogen group-substituted carbonate-based compound, a nitrile-based compound, a cyclic carbonate-based compound, a phosphate-based compound, a borate-based compound, a cyclic sulfite, a non-cyclic sulfone, and a lithium salt-based compound.

Specifically, the halogen group-substituted carbonate-based compound may be fluoroethylene carbonate (FEC), and may be included in an amount of 5 parts by weight or less, specifically, 0.1 parts by weight to 5 parts by weight, based on 100 parts by weight of the entire electrolyte solution. When the content of the halogen group-substituted carbonate-based compound exceeds 5 parts by weight, cell swelling performance may deteriorate.

Furthermore, examples of the nitrile-based compound include at least one or more compounds selected from the group consisting of succinonitrile (SN), adiponitrile (Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.
In this case, when the nitrile-based compound is used together with the above-described additive, effects such as improvement of high-temperature characteristics may be expected by stabilizing the positive electrode/negative electrode film. That is, the nitrile-based compound may serve as a complementary agent in forming the negative electrode SEI film, may serve to suppress the decomposition of the solvent in the electrolyte solution, and may serve to improve the mobility of lithium ions. The nitrile-based compound may be included in an amount of 5 parts by weight or less, specifically, 0.1 parts by weight to 2 parts by weight, based on 100 parts by weight of the entire non-aqueous electrolyte solution. When the total content of the nitrile-based compound in the non-aqueous electrolyte solution exceeds the above range, the resistance increases due to an increase in film formed on the electrode surface, so that the battery performance may deteriorate.

The cyclic carbonate-based compound may form a stable SEI film mainly on the surface of the negative electrode during the activation of the battery to improve the durability of the battery. The cyclic carbonate-based compound may be vinylene carbonate (VC) or vinylethylene carbonate, and may be included in an amount of 5 parts by weight or less, specifically, 0.1 parts by weight to 5 parts by weight, based on 100 parts by weight of the entire non-aqueous electrolyte solution. When the content of the cyclic carbonate-based compound in the non-aqueous electrolyte solution exceeds 5 parts by weight, cell swelling suppression performance and initial resistance may deteriorate.

Since the phosphate-based compound stabilizes PF₆⁻ and the like in the electrolyte solution and helps to form positive electrode and negative electrode films, the durability of the battery may be improved. The phosphate-based compound may be one or more compounds selected from the group consisting of lithium difluoro(bisoxalato)phosphate (LiDFOP), lithium difluorophosphate (LiDFP, LiPO₂F₂), tetramethyl trimethyl silyl phosphate (LiTFOP), trimethyl silyl phosphite (TMSPi), tris(2,2,2-trifluoroethyl)phosphate (TFEPa) and tris(trifluoroethyl)phosphite (TFEPi), and may be included in an amount of 3 parts by weight or less based on 100 parts by weight of the entire non-aqueous electrolyte solution. Specifically, the lithium salt-based compound may be included in an amount of 0.01 parts by weight or more and 3 parts by weight or less.

The borate-based compound may improve the mobility of lithium ions by promoting the ion pair separation of the lithium salt, may reduce the interfacial resistance of the SEI film, and may solve problems such as the generation of hydrofluoric acid gas by dissociating materials such as LiF, which are generated during battery reactions and difficult to separate. The borate-based compound may be lithium bioxalylborate (LiBOB, LiB(C₂O₄)₂), lithium oxalyl difluoroborate or tetramethyl trimethylsilyl borate (TMSB), and may be included in an amount of 3 parts by weight or less based on 100 parts by weight of the entire non-aqueous electrolyte solution. Specifically, the lithium salt-based compound may be included in an amount of 0.01 parts by weight or more and 3 parts by weight or less.

Further, the lithium salt-based compound is a compound different from the lithium salt included in the non-aqueous electrolyte solution, may be one or more compounds selected from the group consisting of LiODFB and LiBF₄, and may be included in an amount of 3 parts by weight or less based on 100 parts by weight of the entire non-aqueous electrolyte solution. Specifically, the lithium salt-based compound may be included in an amount of 0.01 parts by weight or more and 3 parts by weight or less.

The additive for forming an SEI film can be used in combination of two or more, and may be included in an amount of 10 parts by weight or less, specifically 0.01 parts by weight to 10 parts by weight, and preferably 0.1 parts by weight to 5.0 parts by weight based on 100 parts by weight of the entire electrolyte solution.

When the content of the additional additive satisfies the above range, an effect of forming a better film may be implemented, and when the content is 10 parts by weight or less, it is possible to prevent a decrease in capacity of the battery and an increase in viscosity of the electrolyte solution due to side reactions of the excessive non-aqueous electrolyte solution additive, and a phenomenon such as an increase in resistance and a decrease in ion conductivity caused by the decrease in capacity of the battery and the increase in viscosity of the electrolyte solution. When the content of the additional additive exceeds 10 parts by weight, excessive side reactions is likely to occur in the electrolyte solution during charging and discharging of the battery. In particular, when the additive for forming an SEI film is added in an excessive amount, the additive may not be sufficiently decomposed and remain unreacted or precipitated in the electrolyte solution at room temperature. Accordingly, the resistance increases, so that the service life characteristics of the secondary battery may deteriorate.

In an exemplary embodiment of the present invention, the electrolyte solution for a lithium secondary battery may further include vinylene carbonate (VC), fluoroethylene carbonate (FEC) and succinonitrile (SN).

In an exemplary embodiment of the present invention, the sultone-based compound is included in an amount of 0.1 parts by weight to 5 parts by weight based on 100 parts by weight of the entire electrolyte solution. Specifically, the sultone-based compound may be included in an amount of 0.1 parts by weight to 2 parts by weight, or 0.1 parts by weight to 1.5 parts by weight, or 0.2 parts by weight to 1 part by weight. More specifically, the compound represented by Chemical Formula 1 may be included in an amount of 0.4 parts by weight to 0.6 parts by weight, or 0.5 parts by weight. There is a problem in that when the content of an S-containing additive such as the sultone-based compound is more than the above range, the interfacial resistance increases, and when the content is less than the above range, sufficient interfacial resistance cannot be obtained.

In an exemplary embodiment of the present invention, the LiPO₂F₂ is included in an amount of 0.1 parts by weight to 2 parts by weight based on 100 parts by weight of the entire electrolyte solution. Specifically, the LiPO₂F₂ may be included in an amount of 0.3 parts by weight to 2 parts by weight, or 0.5 parts by weight to 2 parts by weight. More specifically, the LiPO₂F₂ may be included in an amount of 0.5 parts by weight to 1.2 parts by weight, or 1 part by weight to 1.2 parts by weight, or 1 part by weight. There is a problem in that when the content of LiPO₂F₂ is less than the above range, it is difficult to sufficiently reduce the interfacial resistance, and when the content is more than the above range, it is difficult to express the effect itself because LiPO₂F₂ is not dissolved well even though LiPO₂F₂ is included in the electrolyte solution.

In an exemplary embodiment of the present invention, the compound represented by Chemical Formula 1 is included in an amount of 0.01 parts by weight to 3 parts by weight based on 100 parts by weight of the entire electrolyte solution. Specifically, the compound represented by Chemical Formula 1 may be included in an amount of 0.05 parts by weight to 1 part by weight, or 0.05 parts by weight to 0.5 parts by weight. More specifically, the compound represented by Chemical Formula 1 may be included in an amount of 0.1 parts by weight to 0.5 parts by weight, or 0.2 parts by weight. There is a problem in that when the content of the compound represented by Chemical Formula 1 is less than the above range, the effect of suppressing excessive film formation of the sultone-based compound cannot be obtained, and when the content is more than the above range, a large amount of reductive decomposition gas is generated during initial charging, thereby increasing the internal pressure of the battery.

Therefore, when all of the sultone-based compound; LiPO₂F₂; and the compound represented by Chemical Formula 1 satisfy the above content ranges, the yield of the battery may be improved because an optimum film resistance may be obtained and the OCV distribution after the activation process of the battery is sharply improved.

An exemplary embodiment of the present invention provides a lithium secondary battery including the electrolyte solution for a lithium secondary battery.

Specifically, the secondary battery may include a negative electrode, a positive electrode, a separator interposed between the positive electrode and the negative electrode, and an electrolyte solution, and includes the electrolyte solution for a lithium secondary battery of the present invention as the electrolyte solution.

Further, the lithium secondary battery of the present invention may be manufactured by injecting the non-aqueous electrolyte solution of the present invention into an electrode structure including a positive electrode, a negative electrode and a separator interposed between the positive electrode and the negative electrode. In this case, as the positive electrode, the negative electrode and the separator constituting the electrode structure, those typically used in the manufacture of lithium secondary batteries may be used.

In an exemplary embodiment of the present invention, a lithium secondary battery including the electrolyte solution for a lithium secondary battery may include a P-based, carbonate-based, and S-based mixed SEI film, which can be confirmed through elemental analysis using XPS.

The positive electrode may include a positive electrode current collector and a positive electrode active material layer formed on the positive electrode current collector and including the positive electrode active material.

The positive electrode may be formed by coating a positive electrode current collector with a positive electrode slurry including a positive electrode active material, a positive electrode binder, a positive electrode conductive material, a solvent, and the like and then drying and rolling the coated positive electrode current collector.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector may typically have a thickness of 3 to 500 µm, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c},Mn_{2-c1}O₄ (0≤c1≤0. 33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoridehexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The solvent may include an organic solvent such as N-methyl-2-pyrrolidone (NMP), and may be used in an amount to obtain a preferred viscosity when including the positive electrode active material, and selectively, a binder, a conductive material, and the like. For example, the solvent may be included such that the concentration of the solid content in the slurry including the positive electrode active material and optionally the binder and the conductive material is 50 wt% to 95 wt%, preferably 70 wt% to 90 wt%.

The negative electrode may include a negative electrode current collector and a negative electrode active material layer formed on the negative electrode current collector and including the negative electrode active material.

The negative electrode may be formed by coating a negative electrode current collector with a negative electrode slurry including a negative electrode active material, a negative electrode binder, a negative electrode conductive material, a solvent, and the like and then drying and rolling the coated negative electrode current collector.

The negative electrode current collector generally has a thickness of 3 to 500 µm. The negative electrode current collector is not particularly limited as long as the negative electrode current collector has high conductivity without causing a chemical change to the battery, and for example, it is possible to use copper, stainless steel, aluminum, nickel, titanium, fired carbon, copper or stainless steel surface-treated with carbon, nickel, titanium, silver, and the like, an aluminum-cadmium alloy, and the like. In addition, similar to the positive electrode collector, the adhesion of a negative electrode active material may also be increased by forming fine irregularities on a surface of the negative electrode collector and the negative electrode collector may be used in various forms such as a film, a sheet, a foil, a net, a porous body, a foaming body, and a nonwoven body.

As the negative electrode active material, a compound capable of reversible intercalation and deintercalation may be used. Specific examples thereof include a single material selected from the group consisting of a carbon-based active material, a silicon-based active material, a metal-based active material that can be alloyed with lithium, and a lithium-containing nitride, or a mixture of two or more of thereof.

Representative examples of the carbon-based active material include natural graphite, artificial graphite, expandable graphite, carbon fiber, non-graphitizable carbon, carbon black, carbon nanotubes, fullerene, activated carbon, or the like, and the carbon-based active material can be used without limitation as long as the carbon-based active material is typically used in a carbon material for a lithium secondary battery.

Representative examples of the silicon-based active material include one or more selected from the group consisting of silicon, an alloy of silicon, SiB₄, SiB₆, Mg₂Si, Ni₂Si, TiSi₂, MoSi₂, CoSi₂, NiSi₂, CaSi₂, CrSi₂, Cu₅Si, FeSi₂, MnSi₂, NbSi₂, TaSi₂, VSi₂, WSi₂, ZnSi₂, SiC, Si₃N₄, Si₂N₂O, SiOᵥ(0.5≤ᵥ≤1.2), and LiSiO.

A representative example of the metal-based active material may be a compound containing any one or two or more metal elements selected from the group consisting of Al, Sn, Ag, Bi, Mg, Zn, In, Ge, Pb, Pd, Pt, Ti, Sb, Ga, Mn, Fe, Co, Ni, Cu, Sr, and Ba and the like. These metal compounds may be used in any form such as a single substance, an alloy, an oxide (TiO₂, SnO₂ and the like), a nitride, a sulfide, a boride, and an alloy with lithium, but the single substance, the alloy, the oxide, and the alloy with lithium may be increased in capacity.

In this case, when a negative electrode including a silicon-based active material, or both a silicon-based active material and a carbon-based active material as the negative electrode active material is used, a lithium secondary battery having improved various performances such as cycle service life characteristics may be manufactured. That is, in the case of a silicon-based active material, the stability of the SEI greatly deteriorates due to the large volume change during charging and discharging. Conversely, when the non-aqueous electrolyte solution including the additive of the present invention is used, the effect of improving the service life of the secondary battery using the silicon-based negative electrode active material is more greatly exhibited because a rich SEI film capable of compensating for the disadvantages of the silicon-based active material may be formed while increasing the LiF content in the non-aqueous electrolyte solution.

The negative electrode active material layer may include a negative electrode conductive material and a negative electrode binder together with the above-described negative electrode active material.

The negative electrode binder is a component that assists in bonding between the conductive material, the active material, and the current collector, and is typically added in an amount of 1 wt% to 30 wt% based on the total weight of the solid content in the negative electrode slurry. Examples of such a binder include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, styrene-butadiene rubber, fluororubber, various copolymers thereof, and the like.

The negative electrode conductive material is a component for further improving the conductivity of the negative electrode active material, and may be added in an amount of 1 to 20 wt% based on the total weight of the solid content in the negative electrode slurry. The conductive material is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a metal powder such as a fluorinated carbon powder, an aluminum powder, and a nickel powder; a conductive whisker such as zinc oxide and potassium titanate; a conductive metal oxide such as titanium oxide; a conductive material such as polyphenylene derivatives, and the like.

The solvent may include water or an organic solvent such as NMP and alcohol, and may be used in an amount to obtain a preferred viscosity when including the negative electrode active material, and selectively, a binder, a conductive material, and the like. For example, the solvent may be included such that the concentration of the solid content in the slurry including the negative electrode active material and optionally the binder and the conductive material is 50 wt% to 95 wt%, preferably 70 wt% to 90 wt%.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte solution is preferable. Specifically, it is possible to use a porous polymer film, for example, a porous polymer film formed of a polyolefinbased polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

In another exemplary embodiment of the present invention, the lithium secondary battery may be a cylindrical battery. Specifically, the cylindrical battery may be an 18650 battery or a 21700 battery.

According to another exemplary embodiment of the present invention, provided are a battery module including the secondary battery as a unit cell, and a battery pack including the same. The battery module and the battery pack include the secondary battery which has high capacity, high rate-limiting properties, and cycle properties, and thus, may be used as a power source of a medium-and-large sized device selected from the group consisting of an electric vehicle, a hybrid electric vehicle, a plug-in hybrid electric vehicle, and a power storage system.

### [Best Mode]

Hereinafter, the present specification will be described in detail with reference to Examples for specifically describing the present specification.
However, the Examples according to the present specification may be modified in various forms, and it is not interpreted that the scope of the present application is limited to the Examples described in detail below. The Examples of the present application are provided to explain the present specification more completely to a person with ordinary skill in the art.

### Example 1

### 1) Preparation of electrolyte solution for lithium secondary battery

A non-aqueous electrolyte solution was prepared by adding 0.5 g of 1,3-propane sultone (PS), 0.2 g of methyl prop-2-yn-1-yl carbonate (Ky01, Syntechem Co., Ltd.), 1 g of LiPO₂F₂, 2 g of vinylene carbonate (VC), 2 g of fluoroethylene carbonate (FEC) and 0.5 g of succinonitrile (SN) to 93.8 g of a non-aqueous organic solvent (ethylene carbonate (EC):ethyl methyl carbonate (EMC):dimethyl carbonate (DMC) were mixed at a volume ratio of 20:20:60) and being dissolved such that LiPF₆ became 1.5 M.

### 2) Manufacture of lithium secondary battery

A positive electrode slurry was prepared by adding Li(Ni_{0.5}Mn_{0.3}Co_{0.2})O₂ as a positive electrode active material, a conductive material (carbon black) and a binder (polyvinylidene fluoride; PVDF) at a weight ratio of 95.05:2.15:2.80 to N-methyl-2-pyrrolidone (NMP) which is a solvent. A positive electrode was manufactured by applying the positive electrode slurry to an aluminum (Al) thin film, which is a positive electrode current collector having a thickness of approximately 15 µm, drying the positive electrode slurry, and then rolling the dried aluminum (Al) thin film by a roll press.

A negative electrode slurry was prepared by adding a negative electrode active material (graphite), a conductive material (carbon black), a binder (styrene butadiene rubber; SBR) and carboxymethyl cellulose (CMC) at a weight ratio of 97.0:1.2:0.8:1.0 to H₂O which is a solvent. A negative electrode was manufactured by applying the negative electrode slurry to a copper (Cu) thin film, which is a negative electrode current collector having a thickness of 15 µm, drying the negative electrode slurry, and then rolling the dried copper (Cu) thin film by a roll press.

An electrode assembly was manufactured by sequentially stacking the positive electrode, the negative electrode and a separator including an Al₂O₃ coating PE.

After the electrode assembly was placed inside a case, an electrolyte solution was injected into the case to manufacture a lithium secondary battery.

### Example 2

A lithium secondary battery was manufactured in the same manner as in Example 1, except that 0.05 g of methyl prop-2-yn-1-yl carbonate was added to 93.95 g of the non-aqueous organic solvent.

### Example 3

A lithium secondary battery was manufactured in the same manner as in Example 1, except that 0.5 g of methyl prop-2-yn-1-yl carbonate was added to 93.5 g of the non-aqueous organic solvent.

### Example 4

A lithium secondary battery was manufactured in the same manner as in Example 1, except that 0.2 g of 1,3-propane sultone was added to 94.1 g of the non-aqueous organic solvent.

### Example 5

A lithium secondary battery was manufactured in the same manner as in Example 1, except that 1 g of 1,3-propane sultone was added to 93.3 g of the non-aqueous organic solvent.

### Example 6

A lithium secondary battery was manufactured in the same manner as in Example 1, except that 0.5 g of LiPO₂F₂ was added to 94.3 g of the non-aqueous organic solvent.

### Example 7

A lithium secondary battery was manufactured in the same manner as in Example 1, except that 1.2 g of LiPO₂F₂ was added to 93.6 g of the non-aqueous organic solvent.

### Example 8

A lithium secondary battery was manufactured in the same manner as in Example 1, except that 0.5 g of 1-propene 1,3-sultone was added to 93.8 g of the non-aqueous organic solvent instead of 1,3-propane sultone.

### Example 9

A lithium secondary battery was manufactured in the same manner as in Example 1, except that 0.8 M LiPF₆ instead of 1.5 M LiPF₆ and the non-aqueous organic solvent dissolved such that LiFSI became 0.7 M were used.

### Comparative Example 1

A lithium secondary battery was manufactured in the same manner as in Example 1, except that a non-aqueous electrolyte solution was prepared by adding 2 g of vinylene carbonate (VC) and 2 g of fluoroethylene carbonate (FEC) to 96 g of a non-aqueous organic solvent (ethylene carbonate (EC):ethyl methyl carbonate (EMC):dimethyl carbonate (DMC) were mixed at a volume ratio of 20:20:60) and being dissolved such that LiPF₆ became 1.5 M.

### Comparative Example 2

A lithium secondary battery was manufactured in the same manner as in Comparative Example 1, except that 1 g of LiPO₂F₂ was additionally added to 95 g of the non-aqueous organic solvent.

### Comparative Example 3

A lithium secondary battery was manufactured in the same manner as in Comparative Example 1, except that 1 g of LiPO₂F₂ and 0.5 g of succinonitrile were additionally added to 94.5 g of the non-aqueous organic solvent.

### Comparative Example 4

A lithium secondary battery was manufactured in the same manner as in Comparative Example 1, except that 0.2 g of methyl prop-2-yn-1-yl carbonate, 1 g of LiPO₂F₂ and 0.5 g of succinonitrile were additionally added to 94.3 g of the non-aqueous organic solvent.

### Comparative Example 5

A lithium secondary battery was manufactured in the same manner as in Comparative Example 1, except that 0.5 g of 1,3-propane sultone, 1 g of LiPO₂F₂ and 0.5 g of succinonitrile were additionally added to 94 g of the non-aqueous organic solvent.

### Comparative Example 6

A lithium secondary battery was manufactured in the same manner as in Comparative Example 1, except that 0.5 g of 1,3-propane sultone, 0.2 g of methyl prop-2-yn-1-yl carbonate and 0.5 g of succinonitrile were additionally added to 94.8 g of the non-aqueous organic solvent.

The compositions of the electrolyte solutions of the secondary batteries in the Examples and Comparative Examples are shown in the following Table 1.

**[Table 1]**

| | Lithium salt (M) | | Organic solvent (vol%) | | | Electrolyte solution additive (wt%) | | | | Additional additive (wt%) | | |
|---|---|---|---|---|---|---|---|---|---|---|---|---|
| | LiPF₆ | LiFSI | EC | EMC | DMC | PS | PRS | Ky01 | LiPO₂F₂ | VC | FEC | SN |
| Example 1 | 1.5 | 0 | 20 | 20 | 60 | 0.5 | - | 0.2 | 1 | 2 | 2 | 0.5 |
| Example 2 | 1.5 | 0 | 20 | 20 | 60 | 0.5 | - | 0.05 | 1 | 2 | 2 | 0.5 |
| Example 3 | 1.5 | 0 | 20 | 20 | 60 | 0.5 | - | 0.5 | 1 | 2 | 2 | 0.5 |
| Example 4 | 1.5 | 0 | 20 | 20 | 60 | 0.2 | - | 0.2 | 1 | 2 | 2 | 0.5 |
| Example 5 | 1.5 | 0 | 20 | 20 | 60 | 1 | - | 0.2 | 1 | 2 | 2 | 0.5 |
| Example 6 | 1.5 | 0 | 20 | 20 | 60 | 0.5 | - | 0.2 | 0.5 | 2 | 2 | 0.5 |
| Example 7 | 1.5 | 0 | 20 | 20 | 60 | 0.5 | - | 0.2 | 1.2 | 2 | 2 | 0.5 |
| Example 8 | 1.5 | 0 | 20 | 20 | 60 | - | 0.5 | 0.2 | 1 | 2 | 2 | 0.5 |
| Example 9 | 0.8 | 0.7 | 20 | 20 | 60 | 0.5 | - | 0.2 | 1 | 2 | 2 | 0.5 |
| Comparative Example 1 | 1.5 | 0 | 20 | 20 | 60 | - | - | - | - | 2 | 2 | - |
| Comparative Example 2 | 1.5 | 0 | 20 | 20 | 60 | - | - | - | 1 | 2 | 2 | - |
| Comparative Example 3 | 1.5 | 0 | 20 | 20 | 60 | - | - | - | 1 | 2 | 2 | 0.5 |
| Comparative Example 4 | 1.5 | 0 | 20 | 20 | 60 | - | - | 0.2 | 1 | 2 | 2 | 0.5 |
| Comparative Example 5 | 1.5 | 0 | 20 | 20 | 60 | 0.5 | - | - | 1 | 2 | 2 | 0.5 |
| Comparative Example 6 | 1.5 | 0 | 20 | 20 | 60 | 0.5 | - | 0.2 | - | 2 | 2 | 0.5 |

| | | | | | | | | | | | | |
|---|---|---|---|---|---|---|---|---|---|---|---|---|
| LiFSI: lithium bis(trifluoromethanesulfonyl)imide EC: ethylene carbonate EMC: ethyl methyl carbonate DMC: dimethyl carbonate PS: 1,3-propane sultone PRS: 1-propene 1,3-sultone Ky01: methyl prop-2-yn-1-yl carbonate VC: vinylene carbonate FEC: fluoroethylene carbonate SN: succinonitrile | | | | | | | | | | | | |

### Experimental Example: Evaluation of lithium secondary battery

### <Measurement of OCV distribution>

The lithium secondary batteries manufactured in Examples 1 to 9 and Comparative Examples 1 to 6 were each subjected to high-temperature aging at 60°C for 1 day after being precharged to SOC 0.8% at 0.3 C. Thereafter, after primary charge (0.2 C, SOC 80%), high temperature (60°C, 24 hr) and room temperature (12 hr) aging, CC discharge (2 step, 1.5 C 2.5 V/0.2 C 2.5 V) was performed. Finally, the batteries were subjected to a process of shipping charge (CCCV 1 C, 3.61 V 100 mA cut-off), and then an activation process was performed.

After the activation process, the batteries were finally stored at room temperature for 5 days, and then an open circuit voltage (OCV) was measured under the conditions of 1000 Hz, R range 100 mΩ, Z speed slow, and V speed fast using a battery impedance meter device manufactured by HIOKI, and the results are shown in the following Table 2.

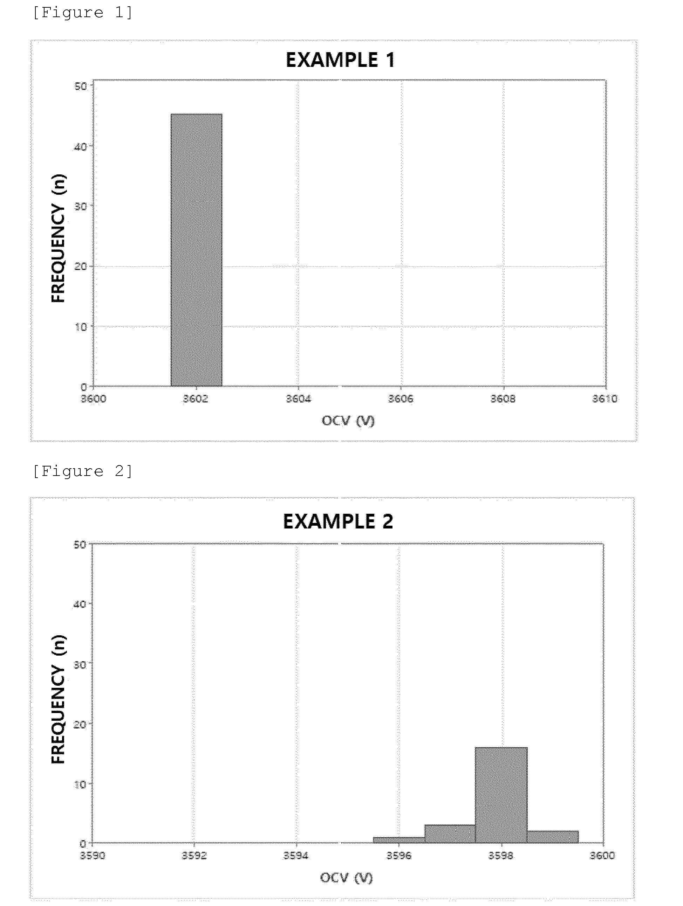

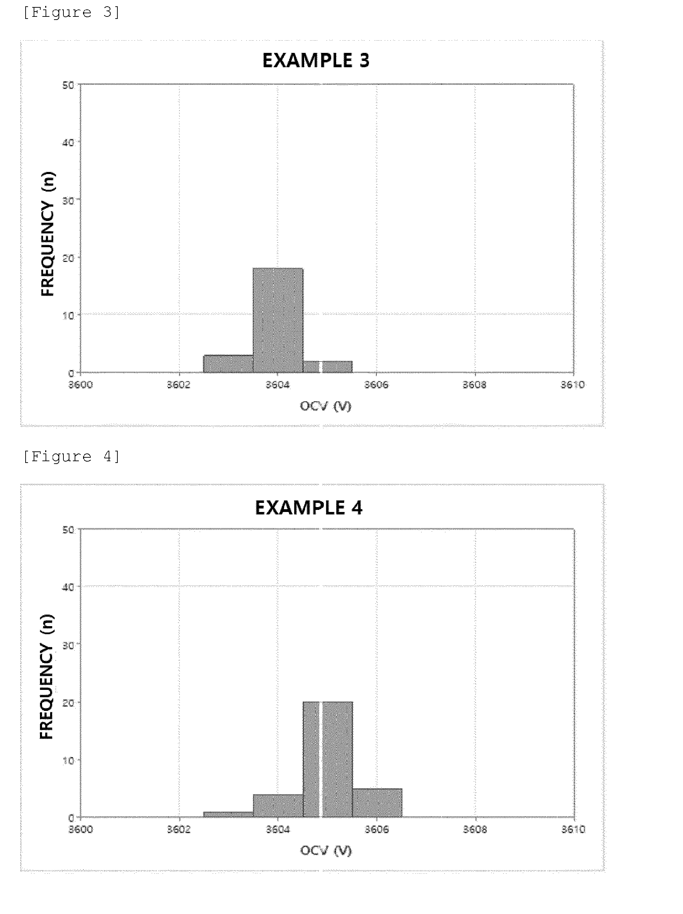

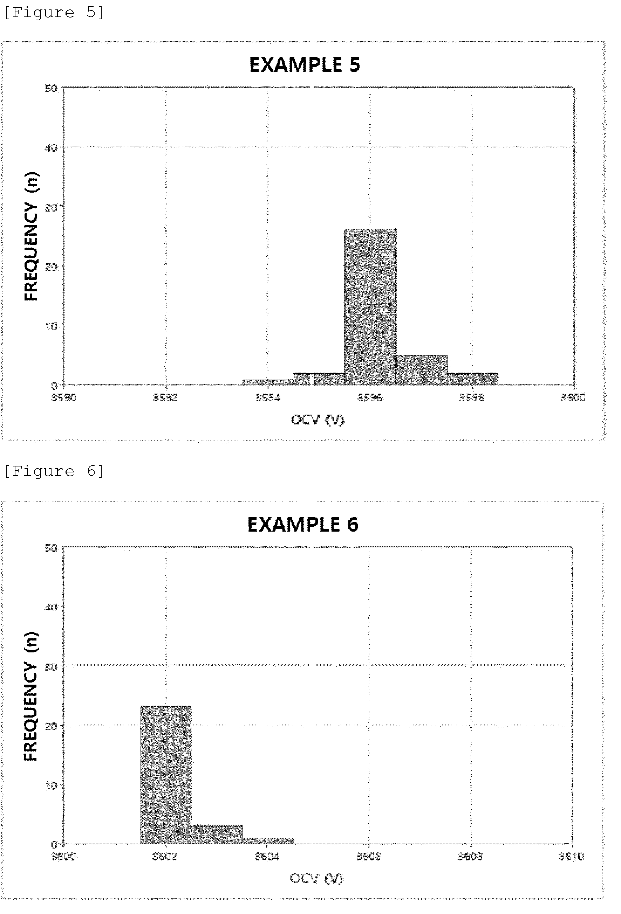

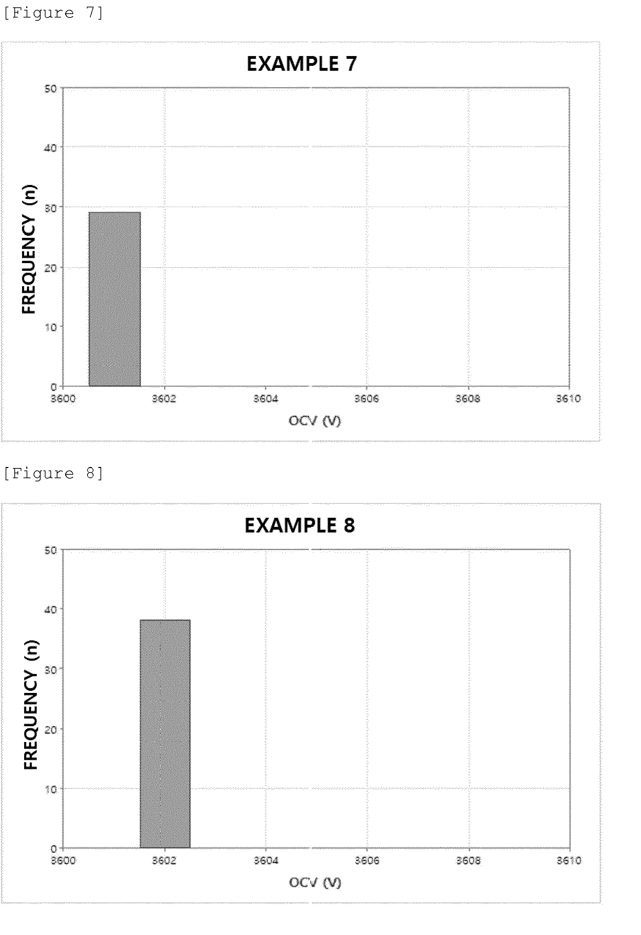

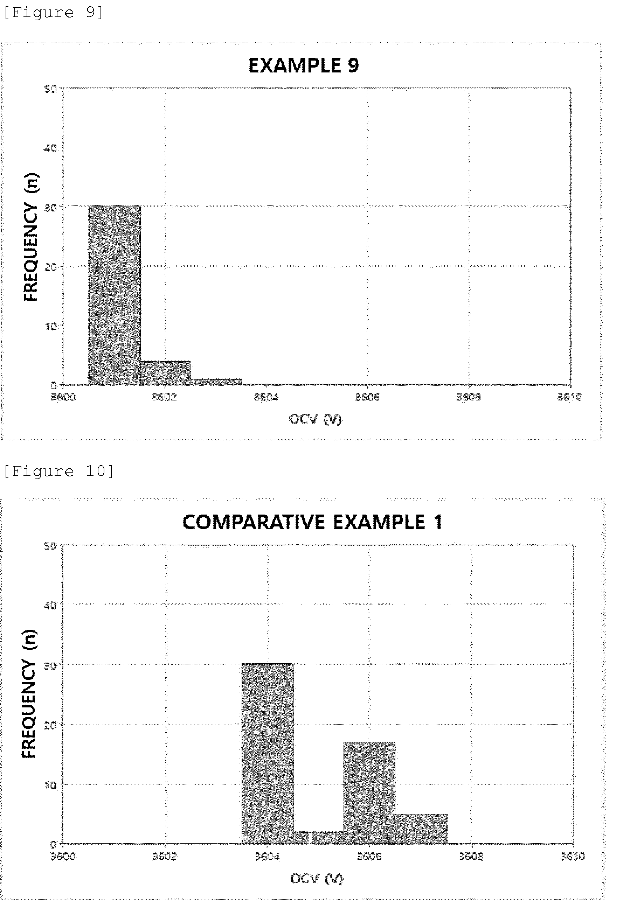

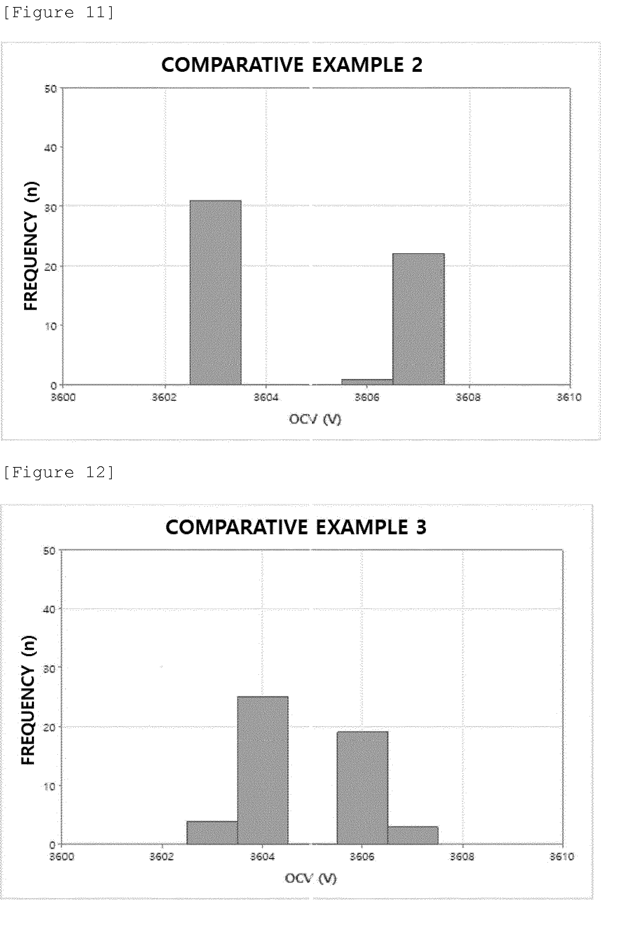

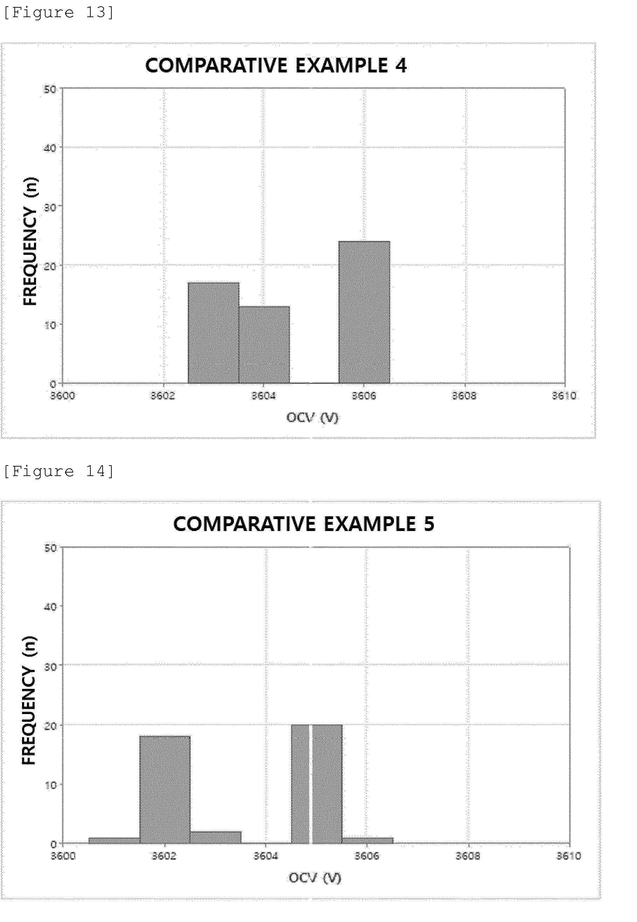

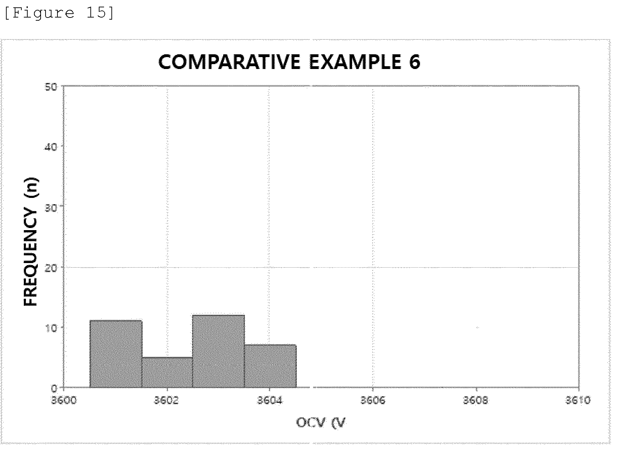

FIGs. 1 to 9 illustrate the OCV distributions of Examples 1 to 9, respectively, and FIGs. 10 to 15 illustrate the OCV distributions of Comparative Examples 1 to 6, respectively.

**[Table 2]**

| | n | Ave. (mV) | Max (mV) | Min (mV) | 3σ (mV) |
|---|---|---|---|---|---|
| Example 1 | 45 | 3602 | 3602 | 3602 | 0 |
| Example 2 | 22 | 3598 | 3599 | 3596 | 2 |
| Example 3 | 23 | 3604 | 3605 | 3603 | 1 |
| Example 4 | 30 | 3605 | 3606 | 3603 | 2 |
| Example 5 | 36 | 3596 | 3598 | 3594 | 2 |
| Example 6 | 27 | 3602 | 3604 | 3602 | 1 |
| Example 7 | 29 | 3601 | 3601 | 3601 | 0 |
| Example 8 | 38 | 3602 | 3602 | 3602 | 0 |
| Example 9 | 35 | 3601 | 3603 | 3601 | 1 |
| Comparative Example 1 | 54 | 3605 | 3607 | 3604 | 3 |
| Comparative Example 2 | 54 | 3605 | 3607 | 3603 | 6 |
| Comparative | 51 | 3605 | 3607 | 3603 | 4 |
| Example 3 | | | | | |
| Comparative Example 4 | 54 | 3605 | 3606 | 3603 | 4 |
| Comparative Example 5 | 42 | 3604 | 3606 | 3601 | 5 |
| Comparative Example 6 | 35 | 3602 | 3604 | 3601 | 3 |

| | | | | | |
|---|---|---|---|---|---|
| n: Frequency of occurrence of OCV after battery activation Ave.: OCV average value after battery activation 3σ: 3 standard deviations of the OCV distribution | | | | | |

It can be confirmed that in a battery using the electrolyte solution additive of the present invention, the OCV distribution after the completion of the activation process exhibits a very sharp shape.

Specifically, referring to the OCV distributions of Examples 1 to 9, it was confirmed that the values of 3 standard deviations (3σ) had a low value of 0 mV to 2 mV. Even in graphs showing the OCV distributions of the examples of FIGs. 1 to 9, it could be confirmed that the OCV distributions exhibited a very sharp shape.

Conversely, referring to the OCV distributions of Comparative Examples 1 to 6, which did not have the composition of the electrolyte solution additive of the present invention, it could be confirmed that the values of 3 standard deviations (3σ) had a high value of 3 mV to 6 mV. This means that the voltage values according to the OCV occurrence frequency are distributed more broadly than in Examples 1 to 9. Even in the graphs showing the OCV distributions of the comparative examples of FIGs. 10 to 15, it could be confirmed that it was highly likely to be determined as defective because the OCV voltage values were widely distributed or present in a double-bar shape.

Therefore, a battery using the electrolyte solution additive according to an exemplary embodiment of the present invention may contribute to an improvement in yield of the battery because the distribution of the OCV exhibits a very sharp shape after completion of the activation process.

## Claims

1. An electrolyte solution additive comprising:
a sultone-based compound;
LiPO₂F₂; and
a compound represented by the following Chemical Formula 1: 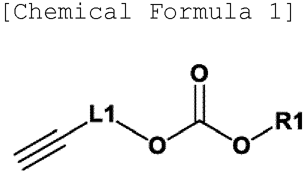
wherein, in Chemical Formula 1,
R1 is hydrogen; a substituted or unsubstituted alkyl group having 1 to 10 carbon atoms; or a substituted or unsubstituted aryl group having 6 to 30 carbon atoms, and
L1 is a substituted or unsubstituted alkylene group having 1 to 10 carbon atoms.

2. The electrolyte solution additive of claim 1,
wherein R1 is an alkyl group having 1 to 10 carbon atoms.

3. The electrolyte solution additive of claim 1,
wherein L1 is an alkylene group having 1 to 5 carbon atoms.

4. The electrolyte solution additive of claim 1,
wherein a weight ratio of the sultone-based compound and the compound represented by Chemical Formula 1 (sultone-based compound : compound represented by Chemical Formula 1) is 5:5 to 8:2.

5. The electrolyte solution additive of claim 1, wherein the sultone-based compound is one or more selected from the group consisting of 1,3-propane sultone; and 1-propene 1,3-sultone, and
the compound represented by Chemical Formula 1 is methyl prop-2-yn-1-yl carbonate.

6. An electrolyte solution for a lithium secondary battery, comprising: a lithium salt; an organic solvent; and the electrolyte solution additive according to any one of claims 1 to 5.

7. The electrolyte solution of claim 6, wherein the sultone-based compound is comprised in an amount of 0.1 parts by weight to 5 parts by weight based on 100 parts by weight of the entire electrolyte solution.

8. The electrolyte solution of claim 6, wherein the LiPO₂F₂ is comprised in an amount of 0.1 parts by weight to 2 parts by weight based on 100 parts by weight of the entire electrolyte solution.

9. The electrolyte solution of claim 6, wherein the compound represented by Chemical Formula 1 is comprised in an amount of 0.01 parts by weight to 3 parts by weight based on 100 parts by weight of the entire electrolyte solution.

10. The electrolyte solution of claim 6, wherein the lithium salt comprises Li⁺ as a cation, and
comprises, as an anion, one or more selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, CF₃(CF₂)₇SO₃⁻, CF₃CO₂⁻, CH₃CO₂⁻, SCN⁻ and (CF₃CF₂SO₂)₂N⁻.

11. The electrolyte solution of claim 6, wherein the organic solvent comprises one selected from the group consisting of an ether-based solvent, an ester-based solvent and an amide-based solvent, or a mixture of two or more selected from the above group.

12. The electrolyte solution of claim 6, wherein the electrolyte solution further comprises one or more additives selected from the group consisting of a halogen group-substituted carbonate-based compound, a nitrile-based compound, a cyclic carbonate-based compound, a phosphate-based compound, a borate-based compound, a cyclic sulfite, a non-cyclic sulfone, and a lithium salt-based compound.

13. A lithium secondary battery comprising the electrolyte solution according to claim 6.

14. The lithium secondary battery of claim 13, wherein the lithium secondary battery is a cylindrical battery.

## Patentansprüche

1. Elektrolytlösungsadditiv, umfassend:
eine Verbindung auf Basis von Sulton;
LiPO₂F₂; und
eine Verbindung, dargestellt durch die folgende chemische Formel 1: 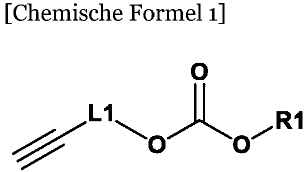
wobei in der chemischen Formel 1
R1 Wasserstoff; eine substituierte oder unsubstituierte Alkylgruppe mit 1 bis 10 Kohlenstoffatomen; oder eine substituierte oder unsubstituierte Arylgruppe mit 6 bis 30 Kohlenstoffatomen ist, und
L1 eine substituierte oder unsubstituierte Alkylengruppe mit 1 bis 10 Kohlenstoffatomen ist.

2. Elektrolytlösungsadditiv nach Anspruch 1, bei dem R1 eine Alkylgruppe mit 1 bis 10 Kohlenstoffatomen ist.

3. Elektrolytlösungsadditiv nach Anspruch 1, bei dem L1 eine Alkylengruppe mit 1 bis 5 Kohlenstoffatomen ist.

4. Elektrolytlösungsadditiv nach Anspruch 1, bei dem ein Gewichtsverhältnis der Verbindung auf Basis von Sulton und der Verbindung, dargestellt durch die chemische Formel 1 (Verbindung auf Basis von Sulton : Verbindung, dargestellt durch die chemische Formel 1) 5:5 bis 8:2 beträgt.

5. Elektrolytlösungsadditiv nach Anspruch 1, bei dem die Verbindung auf Basis von Sulton eine oder mehrere ist, ausgewählt aus der Gruppe, bestehend aus 1,3-Propansulton; und 1-Propen-1,3-sulton, und
die Verbindung, dargestellt durch die chemische Formel 1, Methylprop-2-in-1-ylcarbonat ist.

6. Elektrolytlösung für eine Lithiumsekundärbatterie, umfassend: ein Lithiumsalz; ein organisches Lösungsmittel; und das Elektrolytlösungsadditiv nach einem der Ansprüche 1 bis 5.

7. Elektrolytlösung nach Anspruch 6, bei der die Verbindung auf Basis von Sulton in einer Menge von 0,1 Gewichtsteilen bis 5 Gewichtsteilen, bezogen auf 100 Gewichtsteile der gesamten Elektrolytlösung, enthalten ist.

8. Elektrolytlösung nach Anspruch 6, bei der das LiPO₂F₂ in einer Menge von 0,1 Gewichtsteilen bis 2 Gewichtsteilen, bezogen auf 100 Gewichtsteile der gesamten Elektrolytlösung, enthalten ist.

9. Elektrolytlösung nach Anspruch 6, bei der die Verbindung, dargestellt durch die chemische Formel 1, in einer Menge von 0,01 Gewichtsteilen bis 3 Gewichtsteilen, bezogen auf 100 Gewichtsteile der gesamten Elektrolytlösung, enthalten ist.

10. Elektrolytlösung nach Anspruch 6, bei der das Lithiumsalz Li⁺ als Kation umfasst, und
als Anion eines oder mehrere umfasst, ausgewählt aus der Gruppe, bestehend aus F⁻, Cl⁻, Br⁻, I⁻, NO₃⁻, N(CN)₂⁻, BF₄-, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, CF₃(CF₂)₇SO₃⁻, CF₃CO₂⁻, CH₃CO₂⁻, SCN⁻ und (CF₃CF₂SO₂)₂N⁻.

11. Elektrolytlösung nach Anspruch 6, bei der das organische Lösungsmittel eines umfasst, ausgewählt aus der Gruppe, bestehend aus einem Lösungsmittel auf Basis von Ether, einem Lösungsmittel auf Basis von Ester und einem Lösungsmittel auf Basis von Amid, oder einer Mischung von zwei oder mehr, ausgewählt aus der obigen Gruppe.

12. Elektrolytlösung nach Anspruch 6, bei der die Elektrolytlösung ferner ein oder mehrere Additive umfasst, ausgewählt aus der Gruppe, bestehend aus einer Verbindung auf Basis von mit einer Halogengruppe substituiertem Carbonat, einer Verbindung auf Basis von Nitril, einer Verbindung auf Basis von cyclischem Carbonat, einer Verbindung auf Basis von Phosphat, einer Verbindung auf Basis von Borat, einem cyclischen Sulfit, einem nichtcyclischen Sulfon und einer Verbindung auf Basis von Lithiumsalz.

13. Lithiumsekundärbatterie, umfassend die Elektrolytlösung nach Anspruch 6.

14. Lithiumsekundärbatterie nach Anspruch 13, bei der die Lithiumsekundärbatterie eine zylindrische Batterie ist.

## Revendications

1. Additif de solution électrolytique comprenant :
un composé à base de sultone ;
LiPO₂F₂ ; et
un composé représenté par la Formule chimique 1 ci-après : 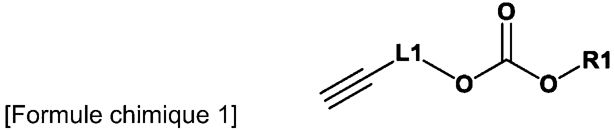
dans lequel, dans la Formule chimique 1,
R1 est un hydrogène ; un groupe alkyle substitué ou non substitué ayant 1 à 10 atomes de carbone ; ou un groupe aryle substitué ou non substitué ayant 6 à 30 atomes de carbone, et
L1 est un groupe alkylène substitué ou non substitué ayant 1 à 10 atomes de carbone.

2. Additif de solution électrolytique selon la revendication 1, dans lequel R1 est un groupe alkyle ayant 1 à 10 atomes de carbone.

3. Additif de solution électrolytique selon la revendication 1, dans lequel L1 est un groupe alkylène ayant 1 à 5 atomes de carbone.

4. Additif de solution électrolytique selon la revendication 1, dans lequel un rapport en poids du composé à base de sultone et du composé représenté par la Formule chimique 1 (composé à base de sultone : composé représenté par la Formule chimique 1) est 5:5 à 8:2.

5. Additif de solution électrolytique selon la revendication 1, dans lequel le composé à base de sultone est un ou plusieurs composés sélectionnés dans le groupe constitué de 1,3-propane sultone ; et 1-propène 1,3-sultone, et
le composé représenté par la Formule chimique 1 est un méthyl prop-2-yn-1-yl carbonate.

6. Solution électrolytique pour une batterie rechargeable au lithium, comprenant : un sel de lithium ; un solvant organique ; et l'additif de solution électrolytique selon l'une quelconque des revendications 1 à 5.

7. Solution électrolytique selon la revendication 6, dans laquelle le composé à base de sultone est compris dans une quantité de 0,1 partie en poids à 5 parties en poids sur la base de 100 parties en poids de la totalité de solution électrolytique.

8. Solution électrolytique selon la revendication 6, dans laquelle le LiPO₂F₂ est compris dans une quantité de 0,1 partie en poids à 2 parties en poids sur la base de 100 parties en poids de la totalité de solution électrolytique.

9. Solution électrolytique selon la revendication 6, dans laquelle le composé représenté par la Formule chimique 1 est compris dans une quantité de 0,01 partie en poids à 3 parties en poids sur la base de 100 parties en poids de la totalité de solution électrolytique.

10. Solution électrolytique selon la revendication 6, dans laquelle le sel de lithium comprend Li⁺ qui est un cation, et
comprend, en tant qu'anion, un ou plusieurs éléments sélectionnés dans le groupe constitué de F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, CF₃(CF₂)₇SO₃⁻, CF₃CO₂⁻, CH₃CO₂⁻, SCN⁻ et (CF₃CF₂SO₂)₂N⁻.

11. Solution électrolytique selon la revendication 6, dans laquelle le solvant organique comprend un élément sélectionné dans le groupe constitué d'un solvant à base d'éther, un solvant à base d'ester et un solvant à base d'amide, ou un mélange de deux éléments ou plus sélectionnés dans le groupe ci-dessus.

12. Solution électrolytique selon la revendication 6, dans laquelle la solution électrolytique comprend en outre un ou plusieurs additifs sélectionnés dans le groupe constitué d'un composé à base de carbonate substitué par un groupe halogène, un composé à base de nitrile, un composé à base de carbonate cyclique, un composé à base de phosphate, un composé à base de borate, un sulfite cyclique, un sulfone non cyclique et un composé à base de sel de lithium.

13. Batterie rechargeable au lithium comprenant la solution électrolytique selon la revendication 6.

14. Batterie rechargeable au lithium selon la revendication 13, dans laquelle la batterie rechargeable au lithium est une batterie cylindrique.
